(19) Europäisches Patentamt
European Patent Office
Office européen des brevets

(11) **EP 1 511 626 B1**

(12) **EUROPEAN PATENT SPECIFICATION**

(45) Date of publication and mention
of the grant of the patent:
**23.03.2011 Bulletin 2011/12**

(51) Int Cl.:
**B32B 27/34** (2006.01)  **B32B 27/32** (2006.01)
**C08G 69/08** (2006.01)  **C08G 69/16** (2006.01)
**C08G 69/48** (2006.01)

(21) Application number: **03738776.8**

(22) Date of filing: **21.05.2003**

(86) International application number:
**PCT/NL2003/000379**

(87) International publication number:
**WO 2003/106171 (24.12.2003 Gazette 2003/52)**

(54) **PROCESS FOR PRODUCING A MULTILAYER FLAT FILM CONTAINING AN INTRINSICALLY GEL-FREE, RANDOMLY BRANCHED POLYAMIDE**

VERFAHREN ZUR HERSTELLUNG EINER MEHRSCHICHTIGEN FLACHFOLIE DIE EIN INTRINSISCH GELFREIES, ZUFÄLLIG VERZWEIGTES POLYAMID ENTHÄLT

PROCEDE POUR PRODUIRE UN FILM PLAN MULTICOUCHE CONTENANT UN POLYAMIDE A RAMIFICATION ALEATOIRE, INTRINSEQUEMENT DEPOURVU DE GEL

(84) Designated Contracting States:
**AT BE BG CH CY CZ DE DK EE ES FI FR GB GR HU IE IT LI LU MC NL PT RO SE SI SK TR**

(30) Priority: **12.06.2002 NL 1020830**

(43) Date of publication of application:
**09.03.2005 Bulletin 2005/10**

(73) Proprietor: **DSM IP Assets B.V.**
**6411 TE Heerlen (NL)**

(72) Inventors:
• **DE KROON, Jan**
**NL-6093 JH Heythuysen (NL)**
• **BRINK, Ted**
**NL-6211 XR Maastricht (NL)**

(74) Representative: **Krijgsman, Willem**
**DSM Intellectual Property**
**Office Geleen**
**P.O. Box 9**
**6160 MA Geleen (NL)**

(56) References cited:
**EP-A- 0 000 363    WO-A-00/35992**
**WO-A-02/12371    WO-A-99/03909**
**US-B1- 6 355 358**

• **TH.I. BUTLER IN TAPPI, September 1992 (1992-09), pages 205-211,**
• **1970, THE OXFORD ENGLISH DICTIONARY; OXFORD UNVERSITY PRESS entry: "Adjacent"**

**Description**

The invention relates to a process for producing a multilayer flat film containing a polyamide layer and a layer of another polymer.

The art of producing multilayer flat film and the problems that may arise therein are described in the publication "Effects of flow instability in co-extruded films", Tappi Journal 1992, pages 205-211. One of the most important problems mentioned therein is the occurrence of deviations in the thickness distribution of the various layers at the edge of the multilayer film. As a solution to this problem it is suggested to modify the shape of the die for one of the layers so as to compensate for the occurrence of the thickness differences. This approach has the drawback that the processing window, which should be taken to mean the set of machine settings at which the film can be produced, becomes very narrow. For example, the output speed and thus production rate are limited and must be maintained within narrow limits, because the extent to which the undesired side effect occurs is dependent on the output speed and thus the required modification of the die is also dependent on that speed. Another suggested solution is to provide a temperature profile in the dies. This solution has the same drawbacks as those mentioned earlier. It is also suggested to align the molecular weights of the various materials. It will be clear that this will change certain material properties and thus also the properties of the flat film formed. Thus, in many cases a film having the desired properties will not be obtained.

Polyamide is a material that is commonly applied in multilayer films, and the problem described arises also when polyamide is applied. As a rule, the polyamide layer is intended to impart barrier properties to the film, whilst the layer of the other polymer imparts another property to the film, for example water-tightness, tear strength or a good gloss.

The invention aims to provide a process for producing a multilayer flat film containing, besides a polyamide layer, also at least another polymer and that can be applied in a wide processing window without any modification being required for a die.

This aim is achieved according to invention by the polyamide layer being essentially formed from randomly branched polyamides at least composed of units derived from:

a. AB monomers, which are understood to be a monomer possessing both a carboxylic acid group (A) and an amine group (B),
b. at least one compound I, being a carboxylic acid ($A_v$) with functionality $v \geq 2$ or an amine ($B_w$) with functionality $w \geq 2$,
c. at least one compound II, being a carboxylic acid ($A_v$) with functionality $v \geq 3$ or an amine ($B_w$) with functionality $w \geq 3$, with compound II being a carboxylic acid if compound I is an amine is or with compound II being an amine if compound I is a carboxylic acid, wherein the amounts of units derived from all carboxylic acids and amines in the polyamide satisfy formula 1

$$P < 1 / [(F_A - 1).(F_B - 1)]  \qquad (1)$$

where:

$$P = [\Sigma(n_i.f_i)]_X / [\Sigma(n_i.f_i)]_Y  \qquad (2)$$

where $P \leq 1$ and either $X = A$ and $Y = B$ or $X = B$ and $Y = A$ and

$$F = \Sigma (n_i.f_i^2) / \Sigma (n_i.f_i)  \qquad (3)$$

for, respectively, all carboxylic acids ($F_A$) and amines ($F_B$), wherein $f_i$ is the functionality of a carboxylic acid ($v_i$) or amine ($w_i$), $n_i$ is the number of moles of a carboxylic acid or amine and the summation is conducted for all units derived from carboxylic acids and amines in the polyamide.

These give films with a highly uniform appearance, without the irregularities caused by gels. The specified branched polyamdies are known from WO-00/35992 and the definitions given there for the various components in the above formula apply here also. In particular compound I and compound II are also understood to be mixtures of several carboxylic acids having the same functionality or mixtures of several amines having the same functionality.

In most cases, when the specified branched polyamide is used as a polyamide layer in the production of multilayer flat film, the occurrence of the undesired side effects proves to be prevented also when the customary rectangular dies are used. It is thus possible to produce multilayer flat film in a stable manner and at high speeds in a wide processing window without any modification of dies.

This favourable effect occurs in particular when polyethylene is used as the other polymer and more in particular when the polyethylene is a non-linear polyethylene. The production of multilayer flat film is a technology known per se, usually employing the co-extrusion technique. Here, the materials for the various layers are melted in separate extruders and transported to an extruder head equipped with one or more outflow openings. The various molten streams are then in molten condition contacted with each other across the desired width. This can be effected by for example positioning the dies, from which the various materials emerge, one directly above the other or in parallel or by contacting the various materials with each other already in the head and expelling the formed multilayer product through a common die. The formed, molten multilayer film is then cooled and rolled. The process according to invention may employ the known techniques of making multilayer flat films.

Highly suited for application in the processs according to the invention is branched polyamide wherein caprolactam is the predominant monomer unit. The branched polyamide may contain minor amounts of a non-branched, linear polyamide, for example up to 10 wt.%. The polyamide may also contain the customary additives, for example grafting agents, lubricants, antistatics, anti-blocking agents, colorants and stabilizers. The latter equally applies to the layer of another polymer to be discussed below.

The polyamide consists essentially of branched polyamide, which means that, besides the branched polyamide, an amount of non-branched polyamide may also be present. This amount should be so limited that the favourable effects of the use of the branched polyamide are not lost to an unacceptable extent. At least 50% of the polyamide in the polyamide layer is branched polyamide and more preferably at least 75 % and even 90%. The favourable effect of the presence of the branched polyamide is most manifest when all polyamide in the layer is branched polyamide. Mixtures of different branched polyamides may also be used as branched polyamide.

Suitable materials for the other polymer layer in the process according to invention are all film-forming polymers, in particular the branched forms thereof. Especially suitable as a material for another polymer layer is polyethylene. Examples of suitable ethylene polymers are all thermoplastic homopolymers, producible with the known catalysts such as Ziegler-Natta, Phillips and metallocene catalysts, of ethylene and copolymers of ethylene having as comonomer one or more a-olefinen with 3-10 C atoms, in particular propylene, isobutene, 1-butene, 1-hexene, 4-methyl-1-pentene and 1-octene. The amount of comonomer normally is between 0 and 50 wt.%, preferably between 5 and 35 wt.%. Such polyethylenes are also known as for example high-density polyethylene (HDPE), low-density polyethylene (LDPE), linear low-density polyethylene (LLDPE) and linear very low density polyethylene (VL(L)DPE). Non-linear ethylene polymers are preferred. In addition, branched polypropylene with a Melt Flow Index preferably between 0.5 and 5 g/10 min is highly suitable as a material for the other polymer layer. Suitable polyethylenes have a density of between 860 and 970 kg/m$^3$.

The advantages of the process according to invention, in particular as regards the width of the processing window, become particularly manifest when non-linear polyethylene is used as other polymer. Examples hereof are the LDPE and HDPE described above.

As a rule, in the process according to the invention the polyamide layer preferably is adjacent to the layer of the other polymer. Application of the polyamide layer and the layer of the other polymer as adjacent functional layers directly connected to each other or connected by an adhesive layer has been found to yield a flat film of highly uniform thickness also at the edges of the film. The layers may thus be directly adjacent to each other but an adhesive layer may also be present between the layers. Adhesive layers between the polyamide and the other polymer are also applied according to the state of the art and thus are known per se. Such known adhesive layers may also be applied in the process according to the invention. The same applies to materials that can be admixed in the other polymer in order to promote adhesion to the polyamide layer. If polyethylene is used as polymer for the other layer, suitable materials for an adhesive layer are for example modified polyolefins, such as LDPE, LLDPE, metallocene PE, polyethylene-vinyl alcohol, polyethylene-acrylic acid, polyethylene-methacrylic acid and polypropylene, that are grafted with at least a compound chosen from the group of α,β-unsaturated dicarboxylic acids, for example maleic acid, fumaric acid and itaconic acid and anhydrides, acidic esters, acidic imides and acidic imines thereof. Modified copolymers of ethylene and the aforementioned dicarboxylic acids may also be applied as adhesive layer in the

manner indicated.

If the layers are directly adjacent to each other, the layer of the other polymer preferably consists of a mixture of that polymer and a material described above as being suitable as an adhesive layer in order to promote adhesion between the layer of the other polymer and the polyamide. In case polyethylene is the other polymer the aforementioned modified polyolefin preferably is present in the mixture as adhesion promoter.

The polyamide layer may also be adjacent to a layer of the other polymer on two sides, for example an LDPE layer, and the other way round. The formed film then has for example a PA-LDPE-PA or LDPE-PA-LDPE sandwich structure.

Besides the mentioned layers, one or more other functional layers may also be placed over the polyamide layer or the layer of the other polymer, it being preferred for the the polyamide layer and the layer of the other polymer to be adjacent to each other. Other layers often used in multilayer flat film are those which consist of for example ethylene-vinylalcohol and ionomers.

The total thickness of multilayer films that are produced in practice as multilayer flat film and are also produced by the process according to the invention is between 20 and 300 μm. In the process according to the invention the layer of the other polymer, for example the polyethylene layer in the multilayer flat film, preferably has a thickness of at least 10 μm. The upper limit of the thickness is given by the intended application and the properties required therefor and extends in practice to approx. 100 μm. The branched-polyamide layer has a thickness of at least 2 μm and preferably of at least 20% of the thickness of the polyolefin layer, up to a maximum of 150, preferably 100 μm. Any other layers present have such thicknesses that they are able to perform their intended function during the production process or in the multilayer flat film to be formed.

The production rates applied in the process according to invention prove to be able to be chosen higher than when the conventional non-branched polyamide is used. Rates up to a factor of 2 or even 4 higher than when non-branched polyamide is used have proved possible in the process according to invention, which thus has a markedly larger operating window than the known process.

The invention further reltates to a multilayer flat film containing a polyamide layer and a layer of another polymer, wherein the polyamide layer is essentially formed from an intrinsically gel-free, randomly branched polyamides as defined hereinbefore. This multilayer film combines a high degree of smoothness and is gelfree.

The invention will be elucidated with reference to the following examples and comparative experiments.

Experimental set-up and procedure

A five-layer flat film made up of 30 μm polyethylene/5 μm adhesive layer/30 μm polyamide/5 μm adhesive layer/30 μm polyethylene was produced. As polyethylene use was made of an LDPE with a Melt Flow Index of 4.4 g/ 10 min, as adhesive layer Yparex™ OH042, an MZA-modified LLDPE. As non-branched nylon use was made of Akulon F 132-E (relative viscosity 3.2), as branched polyamide a polyamide made from 97 parts by weight of caprolactam, 0.62 part by weight of bis-hexamethylene-triamine, 0.42 part by weight of adipic acid and 0.71 part by weight of benzoic acid with a relative viscosity in formic acid of 2.80, as polymer. This polymer was post-condensed in the solid phase to a relative viscosity of 2.95 and provided with grafting agent and lubricant.

The film was produced in an extrusion line equipped with a single 60 mm extruder for melting and extruding the polyamide and with two 45 mm extruders for melting polyethylene and the adhesive layer, respectively. In the extruders an ascending temperature profile was maintained, ascending for the nylon from 215 to 280°C, ascending for the polyethylene from 170 to 230°C and ascending for the adhesive layer from 170 to 210°C. The outlet of the extruders was connected to a black box wherein the molten polymers where supplied in the indicated layer configuration to a die having five parallel, rectangular slits approx. 125 cm wide. The die temperature was 280-290°C.

Comparative Experiment A

A five-layer film was produce in the manner described above at a production rate of 7.5 m/min and with a width of 115 cm. The non-branched polyamide was used as polyamide. Virtually no polyamide proved to be present over a distance of approx. 13 cm on both sides of the film.

Examples I-III

Comparative Experiment A was repeated except that the branched polyamide was used as polyamide. The production was successively set to 7,5, 15 and 30 m/min. The polyamide in the produced proved to be present across virtually the full width of the film.

Comparative Experiment B

The example with the production rate of 30 m/min was repeated with the non-branched polyamide under the same conditions as the branched polyamide. The stability of the process diminished and no polyamide proved to be present along the edges over a width of 13 cm.

**Claims**

1. Process for producing a multilayer flat film, containing a polyamide layer and a layer of another polymer, **characterized in that** the polyamide layer comprises at least 50%, with respect to the total amount of polyamide, of an intrinsically gel-free, randomly branched polyamides at least composed of units derived from:

   a. AB monomers, which are understood to be a monomer possessing both a carboxylic acid group (A) and an amine group (B),
   b. at least one compound I, being a carboxylic acid ($A_v$) with functionality $v \geq 2$ or an amine ($B_w$) with functionality $w \geq 2$,
   c. at least one compound II, being a carboxylic acid ($A_v$) with functionality $v \geq 3$ or an amine ($B_w$) with functionality $w \geq 3$, with compound II being a carboxylic acid if compound I is an amine is or with compound II being an amine if compound I is a carboxylic acid, wherein the amounts of units derived from all carboxylic acids and amines in the polyamide satisfy formula 1

$$P < 1 / [(F_A - 1) \cdot (F_B - 1)] \qquad (1)$$

where:

$$P = [\Sigma(n_i \cdot f_i)]_X / [\Sigma(n_i \cdot f_i)]_Y \qquad (2)$$

where $P \leq 1$ and either $X = A$ and $Y = B$ or $X = B$ and $Y = A$ and

$$F = \Sigma (n_i \cdot f_i^2) / \Sigma (n_i \cdot f_i) \qquad (3)$$

   for, respectively, all carboxylic acids ($F_A$) and amines ($F_B$), wherein $f_i$ is the functionality of a carboxylic acid ($v_i$) or amine ($w_i$), $n_i$ is the number of moles of a carboxylic acid or amine and the summation is conducted for all units derived from carboxylic acids and amines in the polyamide.

2. Process according to claim 1 wherein the other polymer is polyethylene.

3. Process according to claim 2 wherein the polyethylene is a non-linear polyethylene.

4. Process according to any one of claims 1-3 wherein the polyamide layer and the layer of the other polymer are adjacent to each other.

**Patentansprüche**

1. Verfahren zur Herstellung einer mehrschichtigen Flachfolie mit einer Polyamidschicht und einer Schicht aus einem anderen Polymer, **dadurch gekennzeichnet, daß** die Polyamidschicht mindestens 50%, bezogen auf die Gesamtmenge an Polyamid, eines intrinsisch gelfreien, statistisch verzweigten Polyamids umfaßt, welches mindestens aus Einheiten aufgebaut ist, welche abgleitet sind von:

   a. AB-Monomeren, unter denen Monomere, die sowohl eine Carbonsäuregruppe (A) als auch eine Amingruppe (B) aufweisen, zu verstehen sind,
   b. mindestens einer Verbindung I, bei der es sich um eine Carbonsäure ($A_v$) mit einer Funktionalität $v \geq 2$ oder ein Amin ($B_w$) mit einer Funktionalität $w \geq 2$ handelt,
   c. mindestens einer Verbindung II, bei der es sich um eine Carbonsäure ($A_v$) mit einer Funktionalität $v \geq 3$ oder ein Amin ($B_w$) mit einer Funktionalität $w \geq 3$ handelt, wobei es sich bei Verbindung II dann, wenn es sich bei Verbindung I um ein Amin handelt, um eine Carbonsäure handelt bzw. es sich bei Verbindung II dann, wenn es sich bei Verbindung I um eine Carbonsäure handelt, um ein Amin handelt, wobei die Mengen der von allen Carbonsäuren und Aminen abgeleiteten Einheiten in dem Polyamid die Formel 1

$$P < 1/[(F_A-1).(F_B-1)] \quad (1)$$

erfüllen, wobei:

$$P = [\Sigma(n_i.f_i)]_X / [\Sigma(n_i.f_i)]_Y \quad (2)$$

wobei $P \leq 1$ und entweder X = A und Y = B oder X = B und Y = A, und

$$F = \Sigma(n_i.f_i^2) / \Sigma(n_i.f_i) \quad (3)$$

für alle Carbonsäuren ($F_A$) bzw. Amine ($F_B$), wobei $f_i$ die Funktionalität einer Carbonsäure ($v_i$) oder eines Amins ($w_i$) ist, $n_i$ die Zahl der Mole einer Carbonsäure oder eines Amins ist und die Summierung für alle von Carbonsäuren und Aminen abgeleiteten Einheiten in dem Polyamid durchgeführt wird.

**2.** Verfahren nach Anspruch 1, bei dem es sich bei dem anderen Polymer um Polyethylen handelt.

**3.** Verfahren nach Anspruch 2, bei dem es sich bei dem Polyethylen um ein nichtlineares Polyethylen handelt.

**4.** Verfahren nach einem der Ansprüche 1-3, bei dem die Polyamidschicht und die Schicht aus dem anderen Polymer aneinander angrenzen.

**Revendications**

**1.** Procédé pour produire un film multicouche plat contenant une couche de polyamide et une couche d'un autre polymère, **caractérisé en ce que** la couche de polyamide comprend au moins 50 %, par rapport à la quantité totale de polyamide, d'un polyamide à ramification aléatoire intrinsèquement dépourvu de gel au moins composé d'unités dérivées :

a. de monomères AB, qui sont entendus comme étant des monomères possédant à la fois un groupe acide carboxylique (A) et un groupe amine (B),
b. d'au moins un composé I étant un acide carboxylique ($A_v$) avec une fonctionnalité $v \geq 2$ ou une amine ($B_w$) avec une fonctionnalité $w \geq 2$,
c. d'au moins un composé II étant un acide carboxylique ($A_v$) avec une fonctionnalité $v \geq 3$ ou une amine ($B_w$) avec une fonctionnalité $w \geq 3$, le composé II étant un acide carboxylique si le composé I est une amine, ou le composé II étant une amine si le composé I est un acide carboxylique,
dans lequel les quantités d'unités dérivées de tous les acides carboxyliques et de toutes les amines dans le polyamide respectent la formule 1 :

$$P < 1/[(F_A-1).(F_B-1)] \quad (1)$$

où :

$$P = [\Sigma(n_i.f_i)]_X / [\Sigma(n_i.f_i)]_Y \qquad (2)$$

où $P \leq 1$ et soit X = A et Y = B, soit X = B et Y = A, et :

$$F = \Sigma(n_i.f_i^2) / \Sigma(n_i.f_i) \qquad (3)$$

pour, respectivement, tous les acides carboxyliques ($F_A$) et toutes les amines ($F_B$), $f_i$ étant la fonctionnalité d'un acide carboxylique ($v_i$) ou d'une amine ($w_i$), ni étant le nombre de moles d'un acide carboxylique ou d'une amine, et la sommation étant réalisée pour toutes les unités dérivées d'acides carboxyliques et d'amines dans le polyamide.

2. Procédé selon la revendication 1, dans lequel l'autre polymère est un polyéthylène.

3. Procédé selon la revendication 2, dans lequel le polyéthylène est un polyéthylène non linéaire.

4. Procédé selon l'une quelconque des revendications 1 à 3, dans lequel la couche de polyamide et la couche de l'autre polymère sont adjacentes l'une à l'autre.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0035992 A

**Non-patent literature cited in the description**

- Effects of flow instability in co-extruded films. *Tappi Journal,* 1992, 205-211